# EUROPÄISCHE PATENTANMELDUNG

(11) **EP 0 615 089 A1**
(43) Veröffentlichungstag der Anmeldung: **14.09.1994**
(21) Anmeldenummer: 94103455.5
(22) Anmeldetag: 07.03.1994
(51) Int. Cl.: F16L 37/088

(54) **Lösbare Steckverbindung für Hochdruckleitungen**

(30) Priorität: 06.03.1993 DE 9303274; 11.09.1993 DE 4330896
(71) Anmelder: DEUTSCHE TECALEMIT GmbH, D-33659 Bielefeld (DE)
(72) Erfinder: Ederle, Anton, D-74229 Oedheim (DE); Felsmann, Wolfgang, D-33659 Bielefeld (DE); Herberhold, Ingo, D-33699 Bielefeld (DE)
(74) Vertreter: Patentanwälte Dipl.-Ing. Bodo Thielking Dipl.-Ing. Otto Elbertzhagen

(57) **Zusammenfassung**

Eine lösbare Steckverbindung für den Anschluß einer Rohr- oder Schlauchleitung (14) an ein Aufnahmeteil (2) besitzt ein mit der Leitung verbundenes Steckteil (1), das in axialer Richtung in eine Aufnahmeöffnung (2a) des Aufnahmeteils (2) einschiebbar ist und in Einschublage verriegelt wird durch einen geschlitzten Ring (3). Der Innendurchmesser des geschlitzten Rings ist im entlasteten Zustand kleiner als der Außendurchmesser eines am Steckteil (1) vorgesehenen Bundes (7, 8). Der geschlitzte Ring (3) ist in einer umlaufenden Nut (13) der Aufnahmeöffnung (2a) des Aufnahmeteils (2) angeordnet, deren Nutgrund einen Durchmesser aufweist, der größer ist als der Außendurchmesser des geschlitzten Rings sowohl im entlasteten als auch im aufgeweiteten, den Bund freigebenden Zustand. Eine axial verschiebliche Hülse (15) dient zum so weit erfolgenden Aufweiten des geschlitzten Rings (3), daß der Ring im aufgeweiteten Zustand den Bund (7, 8) für ein Herausziehen des Steckteils (1) aus dem Aufnahmeteil (2) freigibt.

## Beschreibung

Die Erfindung betrifft eine lösbare Steckverbindung nach dem Oberbegriff des Anspruchs 1.

Bei einer bekannten Steckverbindung dieser Art (DE 39 29 723 A1) ist der elastische, radial einwärts gerichtete Verriegelungsbereich aus mehreren, am Umfang verteilten, einwärts gebogenen Laschen des hülsenförmigen Aufnahmeteils gebildet. Die radial einwärts gerichteten Laschen des hülsenförmigen Aufnahmeteils werden durch die axial verschiebliche Hülse so weit aufgeweitet, daß der am Steckteil vorgesehene, umlaufende Bund freigegeben wird.

Die bekannte lösbare Steckverbindung hat den Nachteil, daß sie eine solche Gestaltung des Aufnahmeteils fordert, daß angeformte elastische, nach innen weisende Laschen hergestellt werden können. Die bekannte Lösung ist nicht realisierbar bei Aufnahmeteilen, welche im wesentlichen blockförmig und starr ausgebildet sind und lediglich eine Aufnahmeöffnung des Aufnahmeteils aufweisen.

Ausgehend von diesem Stand der Technik liegt der Erfindung die Aufgabe zugrunde, eine lösbare Steckverbindung der als bekannt vorausgesetzten Art so auszubilden, daß sie universell zum Anschluß an beliebig geformte Aufnahmeteile verwendbar ist.

Die Lösung dieser Aufgabe erfolgt mit den Merkmalen des Kennzeichnungsteils von Anspruch 1.

Bevorzugte Ausgestaltungen der Erfindung sind in den Unteransprüchen beschrieben.

Die erfindungsgemäße lösbare Steckverbindung hat den Vorteil, daß der elastische Verriegelungsbereich unabhängig von der Außenform des Aufnahmeteils gestaltet werden kann. Der als elastischer Verriegelungsbereich dienende geschlitzte Ring ist sehr einfach und preisgünstig herstellbar mit der Folge, daß die gesamte lösbare Steckverbindung sehr einfach aufgebaut und preisgünstig herstellbar ist.

Nachstehend wird die Erfindung anhand der Zeichnung im einzelnen beschrieben. Es zeigen:
- Figur 1: - einen axialen Längsschnitt durch eine erste Ausführungsform, wobei das Steckteil teilweise in Seitenansicht, teilweise im Schnitt dargestellt ist,
- Figuren 2a: - drei Schnitte durch drei unterschiedliche Ausführungsformen eines geschlitzten Rings,
- Figur 2b: - eine Seitenansicht eines weiteren geschlitzten Rings,
- Figur 3: - einen Längsschnitt durch eine zweite Ausführungsform der Steckverbindung,
- Figur 3a: - eine vergrößerte Darstellung eines Teilbereichs der Steckverbindung gemäß Figur 3,
- Figur 4: - eine weitere Ausführungsform eines Teilbereichs einer Steckverbindung, ähnlich gemäß Figuren 3 und 3a mit zusätzlicher Dichtungsmanschette,
- Figur 5: - eine zu Figur 4 analoge Darstellung mit einer anderen Dichteinrichtung,
- Figur 6: - einen Längsschnitt durch eine erste Ausführungsform der axial verschieblichen Hülse,
- Figur 7: - einen Längsschnitt durch eine zweite Ausführungsform der axial verschieblichen Hülse.

In den unterschiedlichen Ausführungsformen sind gleiche oder einander entsprechende Teile jeweils mit gleichen Bezugszeichen versehen. Sie unterscheiden sich bei Bedarf lediglich durch Hochstriche voneinander.

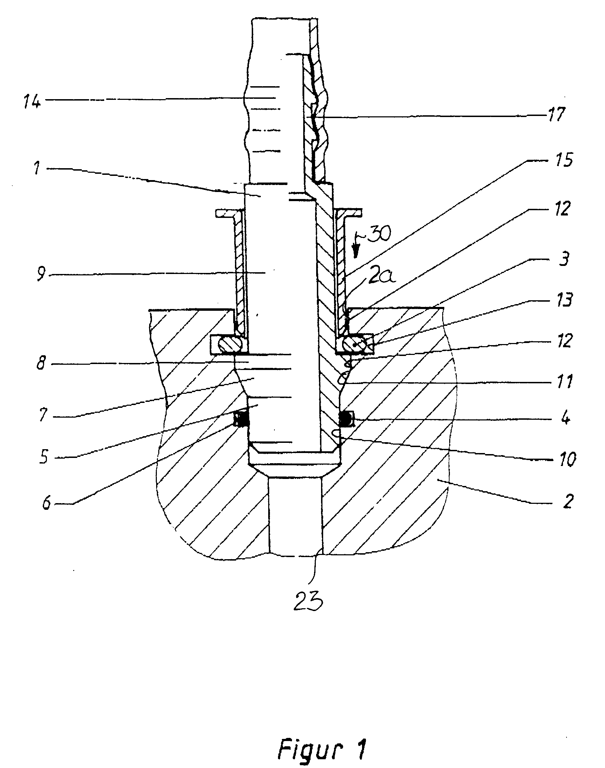

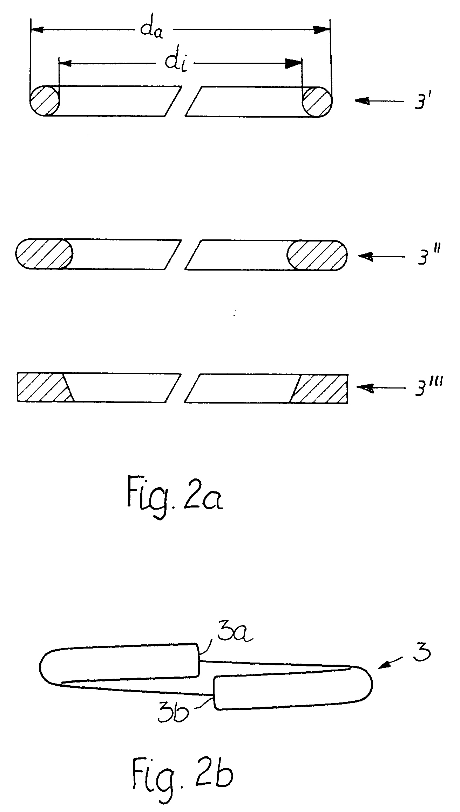

Der grundsätzliche Aufbau ist am besten aus Figur 1 ersichtlich:
Ein hülsenförmiges Steckteil 1 besitzt einen rückseitigen Ansatz 17, über den ein Rohr oder Schlauch 14 geschoben ist. Das Steckteil 1 besitzt an seiner Frontseite einen ersten zylindrischen Abschnitt 5, an den sich ein kegelig oder konisch ansteigender Abschnitt 7 anschließt. Der kegelige Abschnitt 7 endet in einem zweiten zylindrischen Abschnitt, der mit einer Stufe in einen dritten zylindrischen Abschnitt 9 übergeht. Das Gegenstück zu dem Steckteil, also das Aufnahmeteil 2, besitzt eine in mehreren Stufen ausgebildete Aufnahmeöffnung 2a. Der Frontbereich der insgesamt mit 2a bezeichneten gestuften Aufnahmeöffnung mündet in eine Bohrung 23 im Aufnahmeteil 2. Der vordere Bereich der Aufnahmeöffnung 2a ist ein zylindrischer Abschnitt 10. An den zylindrischen Abschnitt 10 schließt sich ein konisch oder kegelig ansteigender Bereich 11 an, der in einen zweiten zylindrischen Abschnitt 12 übergeht. Der zweite zylindrische Abschnitt 12 besitzt eine Sicherungsnut 13. In die Sicherungsnut ist ein geschlitzter Ring 3 als Sicherungsring eingelegt. In Figuren 2a und 2b sind unterschiedliche Formen des geschlitzten Sicherungsrings 3 dargestellt. Bei den unterschiedlichen Ausführungsformen 3' bis 3''' der Figur 2a sind die einander gegenüberliegenden Enden des geschlitzten Rings nicht in axialer Richtung gegeneinander versetzt. Demgegenüber sind die Enden 3a und 3b bei dem Sicherungsring gemäß Figur 2b in axialer Richtung gegeneinander versetzt. Der axiale Versatz der Enden 3a und 3b hat zur Folge, daß die mechanische Verbindung im Verriegelungszustand spielfrei ist. Der Innendurchmesser dᵢ und der Aussendurchmesser dₐ sind lediglich bei der Ausführungsform des Rings 3' eingezeichnet.

Im zylindrischen Bereich 10 der Aufnahmeöffnung 2a ist eine umlaufende Ringnut 6 vorgesehen, in der ein Dichtring 4 liegt.

Eine axial verschiebliche Hülse 15 ist auf dem rückwärtigen Bereich des Steckteils axial verschieblich gelagert. Beim Vorschieben der Hülse 15 in Richtung des Pfeils 30 drückt dessen schräge Stirnfläche den Ring 3 radial auswärts mit der Folge, daß der aus kegeligem Bereich 7 und zylindrischem Bereich 8 gebildete Bund für ein Herausziehen des Steckteils 1 aus der Aufnahmelage frei wird.

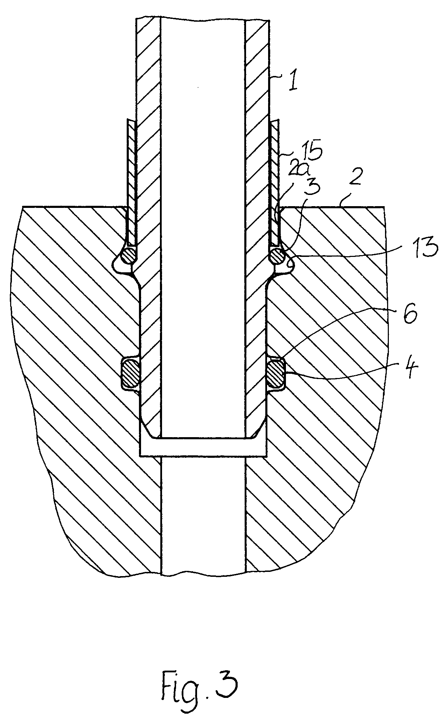

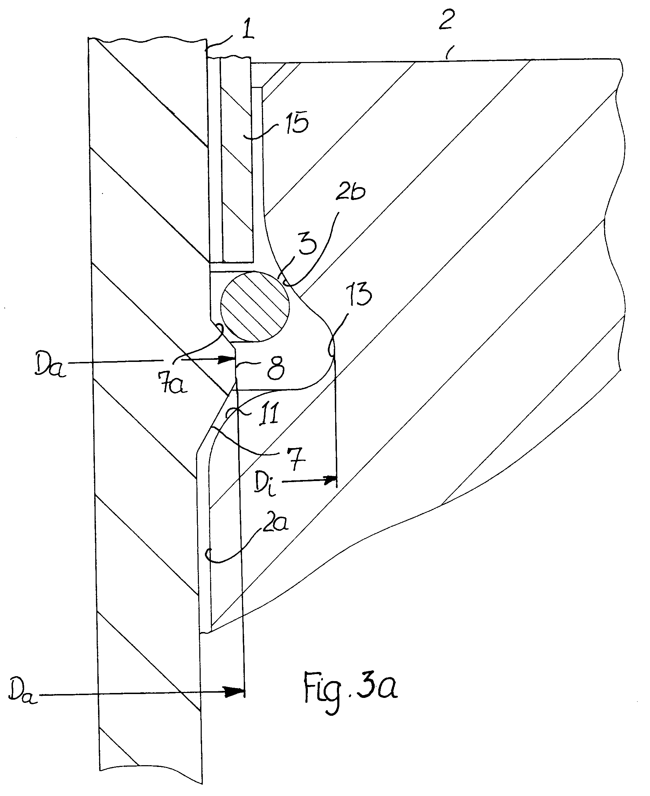

Bei der Ausführungsform gemäß Figuren 3 und 3a ist der Aufbau etwas unterschiedlich zum Aufbau der Figur 1:
Beim Verschieben der Hülse 15 in Richtung des Pfeils 30 wird der Ring 3 gemäß Figur 3a nach unten geschoben. Er weitet sich beim Verschieben entlang der kegeligen Fläche 7a und taucht dabei in die umlaufende Nut 13 ein mit der Folge, daß das Steckteil 1 nach oben ausgezogen werden kann. Der Durchmesser Dᵢ der Nut 13 ist größer als der Außendurchmesser Dₐ des Rings 2 im entlasteten Zustand und auch größer als der Außendurchmesser des Rings 3 im gespreizten Zustand. Im verriegelten Zustand gemäß Figuren 3 und 3a liegt der Ring 3 einerseits an der kegeligen Fläche 7a des Steckteils 1 an und andererseits an dem Einlaufbereich der Nut 13 bildenden Wandbereich 2b.

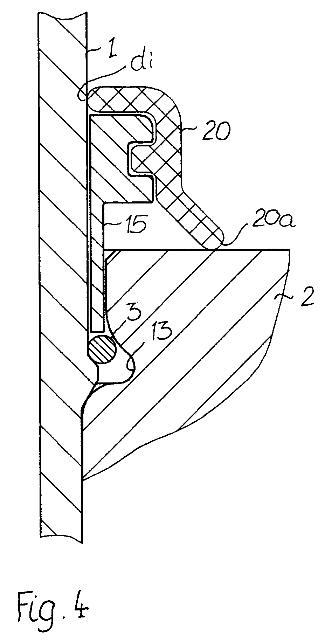

Figur 4 zeigt eine Lösung, deren grundsätzlicher Aufbau der Ausführung gemäß Figuren 3 und 3a entspricht. Bei dieser Lösung ist zusätzlich vorgesehen eine Dichtmanschette 20, welche mit ihrem kreisförmigen Innenumfang dᵢ am Außenumfang des Steckteils 1 anliegt. Eine Dichtlippe 20a liegt im dargestellten Verriegelungszustand an der Stirnseite des Aufnahmeteils 2 an.

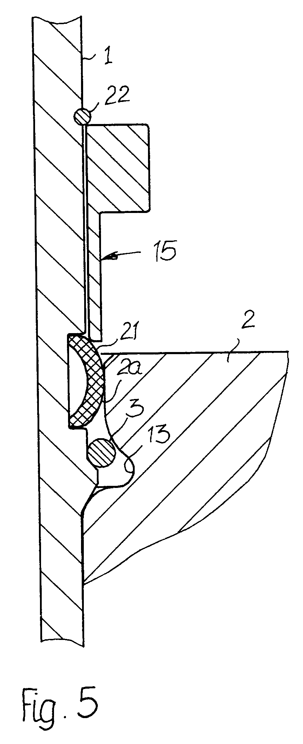

Die Ausführungsform gemäß Figur 5 zeigt einen prinzipiell ähnlichen Aufbau mit der Maßgabe, daß bei dieser Ausführungsform eine Dichtung 21 im wesentlichen in das Innere der Aufnahmeöffnung 2a verlegt ist. Die axial verschiebliche Hülse 15 wird in ihrem Verschiebweg durch einen Ring 22 begrenzt. Zum Lösen der Verbindung wird die Hülse 15 an der Dichtung 21 vorbei bis zur Anlage an den Ring 3 geschoben und bei einem weiteren Verschieben wird der Ring 3 radial aufgespreizt.

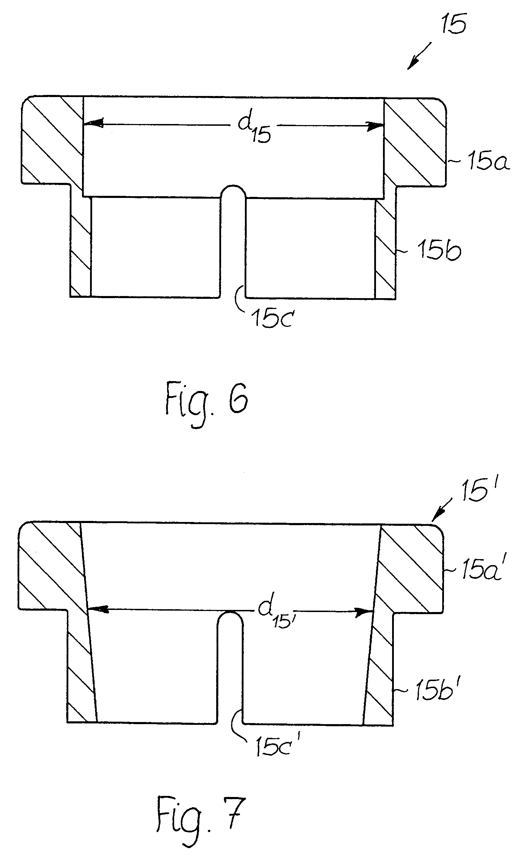

Die Figuren 6 und 7 zeigen unterschiedliche Ausgestaltungen der Hülse 15. In beiden Ausführungsformen ist ein umlaufend geschlossener starrer Bereich 15a bzw. 15a' vorgesehen, an den sich ein in Längsrichtung über Schlitze 15c bzw. 15c' längs geschlitzter Bereich 15b bzw. 15b' anschließt. Der jeweils kleinste Durchmesser d₁₅ bzw. d_{15'} des ungeschlitzten Bereichs 15a bzw. 15a' ist größer als der Außendurchmesser des aus den Flächen 7a, 8 und 7 gebildeten Bundes. Es kann also die Verschiebehülse von der Frontseite des Steckteils 1 über den Bund hinweggeschoben werden, wobei die geschlitzten Hülsenteile radial ausweichen und hinter dem Bund wieder radial einfedern.

Das Aufnahmeteil 2 und das Steckteil 1 können so ausgebildet werden, daß sie zwar in Axialrichtung gegeneinander verschiebbar, nicht jedoch um die Mittelachse verdrehbar sind. Dies kann bewerkstelligt werden durch eine entsprechende formschlüssige Ausgestaltung von Außenfläche des Steckteils 1 und Innenwand der Aufnahmeöffnung 2a.

## Patentansprüche

1. Lösbare Steckverbindung für den Anschluß einer Rohr- oder Schlauchleitung (14) an ein Aufnahmeteil (2), mit einem mit der Leitung verbundenen Steckteil (1), das in axialer Richtung in eine Aufnahmeöffnung (2a) des Aufnahmeteils (2) einschiebbar und in Einschublage verriegelbar sowie nach Lösen eines am Steckteil (1) vorgesehenen, radial einwärts gerichteten, elastischen Verriegelungsbereichs in axialer Gegenrichtung aus dem Aufnahmeteil (2) ausziehbar ist, wobei eine auf dem Steckteil axial verschiebliche Hülse (15) den radial einwärts gerichteten Verriegelungsbereich derart radial auswärts bewegt, daß ein am Steckteil (1) vorgesehener umlaufender äußerer Bund (7, 8, 7a) freigegeben wird, wobei mindestens eine Dichtung (4) zwischen Steckteil (1) und Aufnahmeteil (2) vorgesehen ist,
dadurch gekennzeichnet,
daß der elastische Verriegelungsbereich ein geschlitzter Ring (3; 3'; 3''; 3''') ist, dessen Innendurchmesser (dᵢ) im entlasteten Zustand kleiner ist als der Außendurchmesser (Dₐ) des Bundes (7, 8, 7a), wobei der geschlitzte Ring in einer umlaufenden Nut (13) der Aufnahmeöffnung (2a) des Aufnahmeteils (2) angeordnet ist, deren Nutgrund einen Durchmesser (Dᵢ) aufweist, der größer als der Außendurchmesser (dₐ) des geschlitzten Rings sowohl im entlasteten als auch im aufgeweiteten, den Bund freigebenden Zustand ist, wobei im verriegelten Zustand die Frontseite (7) des Bundes an einer Anlagefläche (11) der Aufnahmeöffnung liegt und der geschlitzte Ring einerseits an der Rückseite (7a) des Bundes und andererseits an einer Gegenfläche (2b) der Aufnahmeöffnung (2a) anliegt.

2. Lösbare Steckverbindung nach Anspruch 1,
dadurch gekennzeichnet,
daß die Enden (3a und 3b) des geschlitzten Rings (3) im entlasteten Zustand in axialer Richtung gegeneinander verschoben sind.

3. Lösbare Steckverbindung nach Anspruch 1 oder 2,
dadurch gekennzeichnet,
daß die axial auf dem Steckteil verschiebliche Hülse (15) aus einem elastischen Kunststoff besteht.

4. Lösbare Steckverbindung nach einem oder mehreren der Ansprüche 1 bis 3,
dadurch gekennzeichnet,
daß der Bund (7, 8, 7a) sowohl auf seiner Frontseite als auch auf seiner Rückseite bis auf einen dazwischen liegenden Bereich größten Durchmessers (Dₐ) ansteigende Umfangsflächen aufweist.

5. Lösbare Steckverbindung nach einem oder mehreren der Ansprüche 1 bis 4,
dadurch gekennzeichnet,
daß die Hülse (15) über einen Teil ihrer Länge geschlitzt ausgebildet ist und im ungeschlitzten Bereich (15a; 15a') einen Innendurchmesser (d₁₅; d_{15'}) aufweist, welcher mindestens gleich groß ist wie der Außendurchmesser (Dₐ) des mittleren Bereichs (8) zwischen den ansteigenden Umfangsflächen (7; 7a).

6. Lösbare Steckverbindung nach einem oder mehreren der Ansprüche 1 bis 5,
dadurch gekennzeichnet,
daß der mindestens einfach vorgesehene Dichtring (4) in eine umlaufende Nut (6) der Aufnahmeöffnung (2a) eingelegt ist.

7. Lösbare Steckverbindung nach einem oder mehreren der Ansprüche 1 bis 6,
dadurch gekennzeichnet,
daß die Hülse (15) an ihrem rückwärtigen Bereich eine umlaufende Dichtmanschette (20) trägt, welche mit ihrem Innenumfang (dᵢ)am Außenumfang des Steckteils (1) anliegt und im verriegelten Zustand mit mindestens einer Dichtlippe an einem Stirnbereich des Aufnahmeteils.

8. Lösbare Steckverbindung nach einem oder mehreren der Ansprüche 1 bis 7,
dadurch gekennzeichnet,
daß der frontseitig vor dem Bund (7, 8, 7a) angeordnete Bereich des Steckteils (1) in seinem Außendurchmesser (Dₐ) höchstens dem Innendurchmesser (dᵢ) des geschlitzten Rings (3) im entspannten Zustand entspricht.

9. Lösbare Steckverbindung nach einem oder mehreren der Ansprüche 1 bis 8,
dadurch gekennzeichnet,
daß das Steckteil (1) und das Aufnahmeteil (2) lediglich in axialer Richtung zueinander verschiebbar, nicht jedoch gegeneinander verdrehbar sind.

10. Lösbare Steckverbindung nach einem oder mehreren der Ansprüche 1 bis 9,
dadurch gekennzeichnet,
daß der frontseitig vor dem Bund (7, 8, 7a) angeordnete Bereich des Steckteils (1) einen Außendurchmesser (Dₗₐ) aufweist, der kleiner ist als der Außendurchmesser (D_{lb}) des rückwärtig hinter dem Bund angeordneten Bereichs des Steckteils (1).
